(19) Europäisches Patentamt
European Patent Office
Office européen des brevets

(11) EP 1 557 441 A2

(12) EUROPÄISCHE PATENTANMELDUNG

(43) Veröffentlichungstag: **27.07.2005 Patentblatt 2005/30**

(51) Int Cl.[7]: **C08G 83/00**

(21) Anmeldenummer: **04028667.6**

(22) Anmeldetag: **03.12.2004**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **23.03.2004 DE 102004014080**
**08.12.2003 DE 10357258**

(71) Anmelder: **Wilharm, Peter, Dr.**
**86356 Neusäss-Täfertingen (DE)**

(72) Erfinder:
- **Wilharm, Peter, Dr.**
  **86368 Gersthofen (DE)**
- **Wilharm, Thomas, Dr.**
  **86497 Bieselbach (DE)**

(74) Vertreter: **Gallo, Wolfgang, Dipl.-Ing. (FH)**
**Ludwigstrasse 26**
**86152 Augsburg (DE)**

(54) **Nukleierungsmittel auf der Basis von hyperverzweigten Polymeren**

(57) Nukleierungsmittel auf der Basis von hyperverzweigten Polymeren mit der Formel

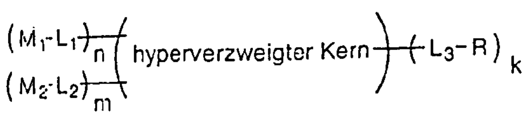

(I)

n oder m unabhängig voneinander 0 oder 1 ist oder n+m<k,
k etwa 10 bis 500 beträgt,
R gleiche oder verschiedene unverzweigte gesättigte Alkylreste mit 8 bis 40 C-Atomen bedeutet,
M1 einen jeweils gleichen oder verschiedenen organischen löslichkeitsvermittelnden Rest mit 10 bis 1000 C-Atomen bedeutet,
M2 einen jeweils gleichen oder verschiedenen organischen dispergierend wirkenden Rest mit 10 bis 100 C-Atomen bedeutet, der wenigstens ein N-Atom enthält und der ungeladen oder zitterionisch sein kann,
L1, L2 und L3 jeweils eine gleiche oder verschiedene divalente Ester-, Carbonat-, Ether-, Tioether-, Amid-, Urethan-, Harnstoff- oder eine -C(O)-$CH_2$-$CH_2$-NR'-Gruppe, in welchletzterer R' ein unverzweigter gesättigter Alkylrest mit 8 bis 40 C-Atomen ist, bedeutet.

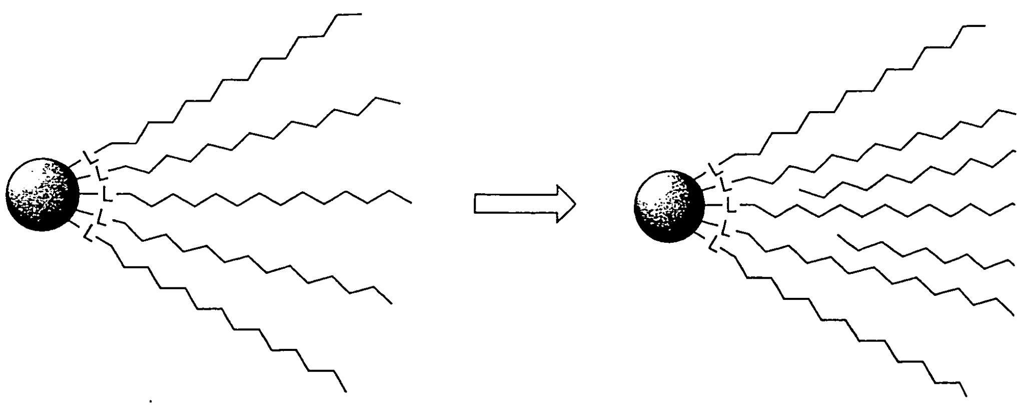

Fig. 1

EP 1 557 441 A2

## Beschreibung

Die Erfindung betrifft die Herstellung neuartiger Nukleierungsmittel (Kristallkeimbildner) auf der Basis von hyperverzweigten Polymeren, und deren Anwendung in paraffinhaltigen Rohölen, Kraftstoffen, Brennstoffen, Ölen oder Schmierstoffen.

Die Erfindung betrifft weiterhin die Anwendung dieser Nukleierungsmittel auf fettstämmige Kraft- und Brennstoffe, wie beispielsweise Fettsäuremethylester.

Bei der Lagerung von paraffinhaltigen Kraftstoffen, Brennstoffen oder Ölen bei tieferer Temperatur beobachtet man die Ausscheidung fester Paraffine. Die Temperatur, bei der die ersten ausfallenden Kristalle als Trübung sichtbar werden, heißt Trübungspunkt ("Cloud Point"). Bei weiterem Abkühlen verfestigt sich die Flüssigkeit durch die Paraffinkristallisation immer weiter, bis der sogenannte Stockpunkt ("Pour Point") erreicht ist.

Die Ursache für dieses Festwerden liegt im Kristallisationsverhalten der ausfallenden Paraffine. Beim Festwerden bildet sich ein dreidimensionales Netzwerk aus Nadeln oder Blättchen, das große Mengen Flüssigkeit einschließt. In der Praxis führt das zu Pumpenausfall und Filterverstopfung bei der Flüssigkeitsförderung.

Fettstämmige Kraft- und Brennstoffe, wie beispielsweise Mischungen aus Fettsäuremethylestern zeigen beim Abkühlen ein ähnlich nachteiliges Verhalten, wie es von paraffinhaltigen Kraftstoffen bekannt ist. So bildet sich beispielsweise beim Abkühlen von Biodiesel auf Basis Rapsöl ein Kristallnetzwerk aus Palmitinsäuremethylester- und Stearinsäuremethylester-Kristalliten, was zu Filterverstopfung in den Zuleitungsystem zu den Verbrennungsaggregaten führen kann.

Um das beschriebene ungünstige Kälteverhalten zu verbessern, sind eine Anzahl von Verfahren bekannt geworden:

Die Entparaffinierung von Kraftstoffen, Brennstoffen oder Ölen kann durch selektive Adsorption an Molekularsieben, durch Abscheidung als Harnstoff Einschlußverbindungen, durch Lösemittelextraktion oder durch Abtrennung mittels fraktionierter Kristallisation erfolgen. Bei fettstämmigen Kraft- und Brennstoffen ist die Abtrennung von in der Kälte schwer löslichen Fettsäuremethylestern mittels fraktionierter Kristallisation möglich, was als "Winterisierung" bezeichnet wird.

Zur Verbesserung des nachteiligen Kälteverhaltens werden den paraffinhaltigen Kraftstoffen, Brennstoffen, Ölen und den fettstämmigen Kraft- und Brennstoffen in der Praxis sogenannte Stockpunktsverbesserer (PPD, Pour Point Depressant) und Antiabsetzmittel (WASA, Wax Anti Settling Additive) zugesetzt.

Stockpunktverbesserer modifizieren das Kristallwachstum dadurch, daß sie an die am schnellsten wachsenden Flächen der Paraffinkristalle angelagert werden. Die äußere Gestalt der wachsenden Kristalle ändert sich von nadel- oder blättchenförmig nach kugelförmig. Als Folge daraus verbessern sich die Kältefließeigenschaften der additivierten Produkte, weil sich kein Kristallnetzwerk ausbilden kann.

Antiabsetzmittel sind häufig tensidische Dispergatoren, die sich an Paraffin- oder Fettsäuremethylester-Kristallen anlagern und deren Agglomeration durch elektrostatische oder sterische Abstoßung verhindern. Die nachteilige Sedimentation der beim Abkühlen ausfallenden Paraffinkristallen wird dadurch verhindert.

Im Gegensatz zu diesen üblicherweise zugesetzten Additiven ist die gezielte Verwendung von Nukleierungsmitteln zur Verbesserung der Kälteeigenschaften bisher nicht gebräuchlich, weil verlässlich wirkende, kostengünstige Zusätze nicht bekannt geworden sind.

## Stand der Technik

Es ist bereits bekannt, daß dendritische Polymere mit einer hydrophoben Außenschale als Nukleierungsmittel bei der Herstellung von polymeren Schaumstoffen ("small cell foams") dienen können. So lehrt die Patentschrift US 5 393 795, daß die dort beanspruchten Nukleierungsmittel die Bildung von einheitlich kleinen Gasblasen bei der Herstellung Schaumstoffen fördern können.

In der Patentschrift US 5 418 301 ist die Herstellung hyperverzweigter Polyester beschrieben, die endständig mit Fettsäuren verestert sind und als Bestandteile von Lackharzen oder Schmierstoffen geeignet sind. Die Patentschrift nimmt aber keinen Bezug auf die Anwendung solcher Polyester als Nukleierungsmittel.

Weiterhin ist als Lehre der Patentschrift US 5,906,970 bekannt, daß Dendrimere auf der Basis von Polyamidoaminen, prinzipiell als Fließverbesserer für fossile und fettstämmige Kraftstoffe geeignet sind. Nachteilig ist, daß die in der Patentschrift beschriebenen Dendrimere nur durch sehr aufwendige, vielstufige Synthese zugänglich sind und daher in der Technik bisher nicht eingesetzt werden.

## Aufgabe und Lösung der Aufgabe

Es bestand daher die Aufgabe, Nukleierungsmittel bereitzustellen, die in paraffinhaltigen Rohölen, Kraftstoffen, Brennstoffen, Ölen oder Schmierstoffen bereits in niedrigen Konzentrationen das Kältefließverhalten verbessern

können und auf einfache Weise für die jeweilige Matrix optimierbar sind. Eine weitere Aufgabe war es, Nukleierungsmittel bereitzustellen, die in fettstämmigen Kraft- und Brennstoffen bereits in niedrigen Konzentrationen das Kältefließverhalten verbessern können und auf einfache Weise für unterschiedlich zusammengesetzte fettstämmige Kraft- und Brennstoffe optimierbar sind.

Diese Aufgabe wird gelöst durch hyperverzweigten Polymere als Nukleierungsmittel der Formel (I)

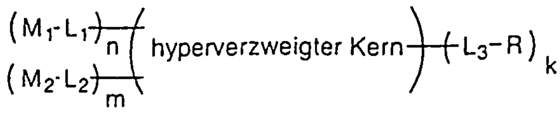

(I)

nach Patentanspruch 1, wobei
n oder m unabhängig voneinander 0, 1 oder n+m<k,
und k 10 bis 500 sein können,
R gleiche oder verschiedene unverzweigte, gesättigte Alkylreste mit 8 bis 40 C-Atomen bedeutet,
M1 ein gleicher oder verschiedener organischer, löslichkeitsvermittelnder Rest mit 10 bis 1000 C-Atomen ist,
M2 ein gleicher oder verschiedener organischer, dispergierend wirkender Rest mit 10 bis 100 C-Atomen ist, der wenigstens ein N-Atom enthält und der ungeladen oder zwitterionisch sein kann
L1, L2 und L3 jeweils eine gleiche oder verschiede divalente Ester-, Carbonat-, Ether-, Thioether-, Amid-, Urethan-, Harnstoff- oder eine -C(O)-$CH_2$-$CH_2$-NR'-Gruppe ist,
und R' ein unverzweigter, gesättigter Alkylrest mit 8 bis 40 C-Atomen ist.

Diese Nukleierungsmittel können allein oder in Kombination mit bekannten Stockpunktsverbesserern und/oder Antiabsetzmitteln in paraffinhaltigen Rohölen, Kraftstoffen, Brennstoffen, Ölen, Schmierstoffen oder in fettstämmigen Kraftstoffen in einem Konzentrationsbereich von 0,005 bis 5 Gewichtsprozent bevorzugt von 0,01 bis 2 Gewichtsprozent, besonders bevorzugt von 0,05 - 1 Gewichtsprozent, zugesetzt werden.

**Wirkprinzip**

Die folgende Modellvorstellungen sollen den Erfindungsgedanken erläutern, ohne ihn einzuschränken.

Gekrümmte molekulare Oberflächen, die paraffinische Endgruppen tragen, können andere unverzweigte Paraffine ein- und anlagern. Dabei bilden sich spontan kristalline Bereiche, an denen es zu weiterem Kristallwachstum kommen kann. Im Unterschied zur homogenen Nukleierung, die durch den Beitrag der Oberflächenenergie inhibiert wird, ist hier jede Anlagerung eines Paraffinmoleküls energetisch vorteilhaft.

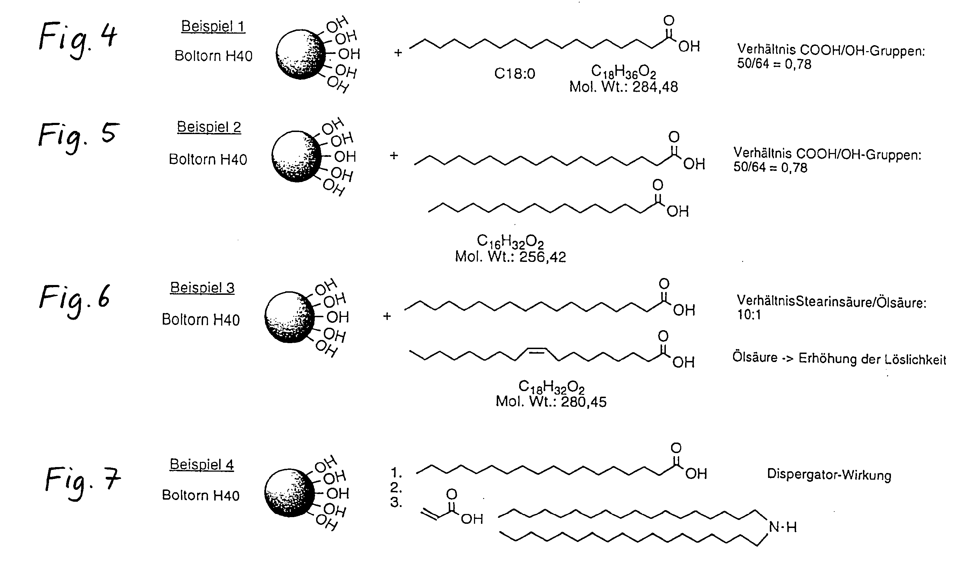

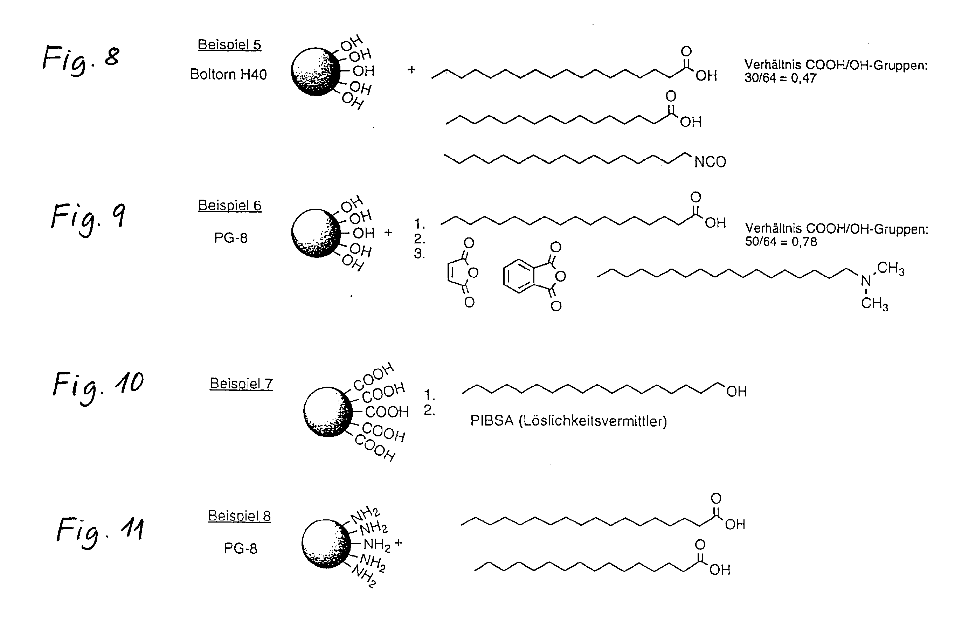

Eine Modellvorstellung dieser induzierten homogenen Nukleierung zeigt Fig. 1.

Dabei steht -L- für eine divalente Gruppe, die den hyperverzweigten Polymerkern mit einer endständigen Alkylgruppe verknüpft.

Die erfindungsgemäßen Nukleierungsmittel können gemäß dieser Modellvorstellung als homogen gelöste Nano-Kristallkeime angesehen werden.

Bei sinkender Temperatur nimmt die relative Übersättigung der Paraffine in paraffinhaltigen Kraftstoffen, Brennstoffen, Ölen oder Schmierstoffen zu. Ein Zusatz der erfindungsgemäßen Nukleierungsmittel bewirkt bereits bei geringer Übersättigung die vorteilhafte Bildung vieler kleiner Kristallite, deren Wachstumsform ggf. durch den Zusatz von bekannten polymeren Kristallmodifikatoren weiter beeinflusst werden kann.

Überraschend wurde gefunden, daß die erfindungsgemäßen Nukleierungsmittel auch in fettstämmigen Kraftstoffen, insbesondere in Fettsäuremethylestern wirksam sind. Offensichtlich können auch Fettsäuremethylesterketten analog zu Paraffinketten an der Außenseite der Nukleierungsmittel eine Kristallisation induzieren.

Die Optimierung der Nukleierungswirkung in paraffinhaltigen Rohölen, Kraftstoffen, Brennstoffen, Ölen, Schmierstoffen oder in fettstämmigen Kraft- und Brennstoffen kann beispielsweise durch den Krümmungsradius des hyperverzweigten Polymerkerns, durch gezielte Variation der Anzahl der nach außen stehenden Alkylgruppen, der Kettenlänge dieser Alkylgruppen und der Kettenlängenverteilung erfolgen.

Weiterhin können die Löslichkeit und das Agglomerationsverhalten der Nukleierungsmittel dadurch beeinflusst werden, dass ggfs. löslichkeitsvermittelnde Reste über eine divalente Gruppe $L_1$ und/oder dispergierend wirkende Reste über eine divalente Guppe $L_2$ an den hyperverzweigten Polymerkern gebunden werden. Figur 2 zeigt ein Beispiel für löslichkeitsvermittelnde Reste. Figur 3 zeigt ein Beispiel für dispergierend wirkende Reste.

**Herstellung der Nukleierungsmittel**

Hyperverzweigte Polymere werden dadurch erhalten, daß man zur Verzweigung befähigte polyfunktionelle Monomere unter kontrollierten Bedingungen einstufig zu polydispersen Polymeren umsetzt. Die äußere Gestalt solcher Polymere kann je nach verwendeten Monomeren und Herstellbedingungen nahezu kugelförmig sein oder auch ellipsoide, zylindrische, halbkugelige oder eine unregelmäßig gekrümmte Gestalt annehmen.

Hyperverzweigte Polymere und ihre Herstellungsweise sind beispielsweise in Hult et al. in "Advances in Polymer Science", Seite 1 bis 34, Band. 143 (1999), Hrsg. J. Roovers, Springer Verlag New York, oder in A. Sunder et al., Advanced Materials, Seite 235 bis 239, Band 12 (2000) ausführlich beschrieben.

Im Gegensatz dazu werden dendritische Polymere ("dendritic polymers") ausgehend von einem mehrwertigen Startmolekül durch schrittweisen Aufbau mittels polyfunktioneller Monomere hergestellt. In der Regel werden nach jeder Synthesestufe die jeweiligen Zwischenprodukte gereinigt, um als Endprodukt ein angenähert monodisperse Polymere zu erhalten.

Dendritische Polymere und ihre Herstellungsweise sind beispielsweise in Tomalia et al. "Starburst Dendrimers: Molecular-Level Control of Size, Shape, Surface Chemistry, Topology and Flexibility from Atoms to Macroscopic Matter", Angew. Chem. Int. Ed. Engl., Vol. 29, Seite 138 bis 175 (1990) ausführlich beschrieben.

Die erfindungsgemäßen Nukleierungsmittel haben als Basis bevorzugt hyperverzweigte Polymere, da diese in großer Variationsbreite leicht und kostengünstig herstellbar sind.

Die für die Herstellung der erfindungsgemäßen Nukleierungsmittel geeigneten hyperzweigten Polymere tragen 10 bis 500, bevorzugt 20 bis 300, besonders bevorzugt 30 bis 200 gleiche oder verschiedene endständige Hydroxyl-, Carboxyl- oder Amino-Gruppen, bevorzugt Hydroxyl- und Carboxyl-Gruppen.

Bevorzugt werden kommerziell verfügbare hyperverzweigte Polymere als Basis zur Herstellung der erfindungsgemäßen Nukleierungsmittel eingesetzt. Beispiele für solche Polymere sind hyperverzweigte Polyglycerine mit endständigen OH-Gruppen und hyperverzweigte Polyethylenimine mit endständigen Aminogruppen der Firma Hyperpolymers GmbH, Freiburg (Deutschland) die unter der Bezeichnung PG-2, PG-5, PG-8, PEI-5, PEI-25 vertrieben werden und hyperverzweigte Polyster mit endständigen OH-Gruppen der Firma Perstorp, Perstorp (Schweden), die unter der Bezeichnung Boltom H-20, Boltorn H-30, Boltorn H-40 vertrieben werden.

Weiterhin sind auch alle hyperverzweigten Polymere geeignet, die in der Patentschrift US 5 418 301 beschrieben worden sind.

Zur Herstellung der erfindungsgemäßen Nukleierungsmittel werden die genannten hyperverzweigten Polymere mit geeigneten langkettigen, endständig funktionalisierten, unverzweigten Alkylverbindungen verknüpft. Die dabei entstehende Verknüpfung besteht vorzugsweise aus einer der folgenden divalenten Gruppen.

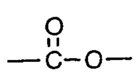 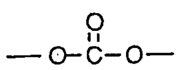 —O— —S—

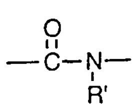 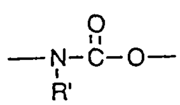 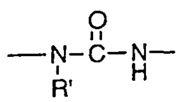 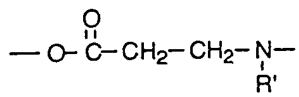

wobei R' ein Wasserstoff-Rest oder ein unverzweigter gesättigter Alkyl-Rest mit 8 bis 40 C-Atomen darstellt.

Als divalente Verknüpfungsgruppen sind Ester-, Amid-, oder Urethan-Gruppen bevorzugt.

Um beispielsweise ein Nukleierungsmittel mit esterverknüpften Alkylgruppen herzustellen, kann man eine der folgenden Kombinationen an Ausgangsprodukten miteinander zu Reaktion bringen:

a) Hyperverzweigtes Polymer mit endständigen Hydroxyl-Gruppen + Fettsäuren oder aktivierte Fettsäurederivate, wie beispielsweise Fettsäurechloride,

b) hyperverzweigtes Polymer mit endständigen Carboxyl-Gruppen oder endständigen Säurechlorid-Gruppen + Fettalkohole.

Zur Herstellung der erfindungsgemäßen Nukleierungsmitteln geeignete langkettige Verbindungen sind unverzweigte, gesättigte Fettsäuren, Fettalkohole oder Fettisocyanate mit jeweils 10 bis 40 C-Atomen, bevorzugt mit jeweils 14 bis 24 C-Atomen. Ebenso geeignet sind die daraus abgeleiteten aktivierten Fettsäure- oder aktivierten Fettalkohol-Derivate.

Weiterhin sind unverzweigte, gesättigte primäre und sekundäre Fettamine der Struktur HNRR' geeignet, wobei R und R' gleich oder verschieden Wasserstoff oder gesättigte unverzweigte aliphatische Reste mit 10 bis 30 C-Atomen, bevorzugt 14 bis 24 C-Atomen, sind.

Beispiele für bevorzugte Fettsäuren oder Fettsäurederivate sind Laurin-, Myristin-, Palmitin-, Stearin-, Arachidin-, Behen-, Cerotin- und Melissinsäure, sowie Mischungen daraus und die daraus abgeleiteten Säurechloride, Säureanhydride, Methylester, sowie Mischungen daraus.

Beispiele für bevorzugte Fettalkohole oder Fettalkoholderivate sind Lauryl-, Myristyl-, Palmityl-, Stearyl-, Arachidyl-, Behenyl- und Cerotyl-Alkohol sowie Mischungen daraus und die daraus abgeleiteten Chlorameisensäureester.

Ebenfalls zur Umsetzung geeignet sind technische Gemische aus im wesentlichen unverzweigten C8-C24-Alkoholen, wie sie als sogenannte Oxoalkohole aus Oxoprozessen anfallen.

Beispiele für bevorzugte primäre Amine sind Octyl-, Nonyl-, Decyl-, Undecyl-, Dodecyl-, Tridecyl-, Tetradecyl-, Pentadecyl-, Hexadecyl-, Heptadecyl-, Octadecylamin, Aminopropylstearylamin, Aminopropyllaurylamin, Aminopropyloleylamin, sowie Mischungen daraus.

Beispiele für bevorzugte sekundäre Amine sind Dipalmitinamin, Dioleylamin, Dikokosfettamin, Dibehenylamin, insbesondere Ditalgfettamin, sowie Mischungen daraus.

**Herstellverfahren/Reaktionen/Reaktionsbedingungen**

Die Veresterung von hyperverzweigten Hydroxyl-funktionalisierten Polymeren mit Fettsäuren oder umgekehrt von hyperverzweigten Carboxyl-funktionalisierten Polymeren mit Fettalkoholen kann katalysiert oder unkatalysiert, bevorzugt sauer katalysiert durch Erhitzen unter Wasserabspaltung bei Reaktionstemperaturen zwischen 60 bis 200°C, bevorzugt zwischen 80 bis 180°C in der Schmelze oder in einem geeigneten Lösemittel ggfs. unter Anwendung eines Azeotropbildners erfolgen.

Geeignete Veresterungs-Katalysatoren sind beispielsweise Toluolsulfonsäure, Methansulfonsäure, Trifluormethansulfonsäure, Schwefelsäure, Phosphorsäure, Bortrifluorid, Zinntetrachlorid, Tetrabutylorthotitanat, Sn-Pulver oder Zinn-organische Verbindungen, wie beispielswiese sogenannte Fascat-Katalysatoren.

Wenn die Reaktion in einem Lösemittel oder Lösemittelgemisch durchgeführt wird, kann nach Reaktionsende das Lösemittel durch Abdampfen bei erhöhter Temperatur entfernt werden und die zurückbleibende Schmelze durch Auftropfen auf ein gekühltes Stahlband granuliert werden.

Statt der freien Fettsäuren können auch aktivierte Fettsäurederivate, wie beispielsweise Fettsäurechloride oder Fettsäureanhydride zur Veresterung eingesetzt werden.

Ausführliche Hinweise zur Katalyse und Reaktionsführung bei Veresterungen und Umesterungen sind ausführlich in der Monographie von J. Otera, Esterification, Wiley-VCH (2003) beschrieben.

Die Herstellung von Nukleierungsmittel mit Amid-verknüpften Alkylgruppen kann durch Reaktion eines Amino-terminierten hyperverzweigten Polymers mit Fettsäuren oder aktivierten Fettsäuredrivaten oder umgekehrt durch Reakion eines Carboxyl-terminierten hyperverzweigten Polymers mit primären oder sekundären Fettaminen erfolgen. Bei Verwendung eines Amino-terminierten hyperverzweigten Polymers werden als Reaktionskomponenten aktivierte Fettsäurederivate die Fettsäuremethyleter bevorzugt.

Solche Amidierungen werden durch Erhitzen unter Wasserabspaltung bei Reaktionstemperaturen zwischen 80 bis 200°C, bevorzugt zwischen 80 bis 160°C in der Schmelze oder in einem geeigneten Lösemittel ggf. unter Anwendung eines Azeotropbildners durchgeführt.

Im Falle von Hydroxyl- oder Amino-terminierten hyperverzweigten Polymeren können Akylketten durch eine zweistufige Reaktion eingeführt werden: Im ersten Schritt wird mit Acrylsäure der entsprechende Acrylsäureester oder das entsprechende Acrylamid unter Wasseraustritt auf bekannte Weise hergestellt. In einer zweiten Stufe werden primäre oder sekundäre Fettamine oder langkettige Alkyltehiole mittels einer Michael-Addition mit oder ohne Verwendung eines Lösemittels in einem Temperaturbereich zwischen 80 bis 140°C, bevorzugt zwischen 100 bis 120°C, an die Doppelbindung addiert.

**Anwendungstechnische Modifizierung der Nukleierungsmittel**

Neben den für die Nukleierungswirkung essentiellen Alkylgruppen können für eine weitere anwendungstechnische Optimierung zusätzlichen modifizierende Gruppen in der Außenschale der hyperverzweigten Polymere eingebaut werden. Der Einbau der löslichkeitsvermittelnden oder dispergierend wirkenden Reste erfolgt analog zu der Art und Weise, wie bereits oben bei Einführung der Alkylresten beschrieben.

**Löslichkeitsvermittelnde Reste**

So können löslichkeitsvermittelnde Reste M1 der Formel (I) zur weiteren Optimierung der Gesamtwirkung der erfindungsgemäßen Nukleierungsmittel herangezogen werden. Wenn beispielsweise das Nukleierungsmittel in einer paraffinhaltigen Matrix bei Raumtemperatur eine zu geringe Löslichkeit aufweist, können löslichkeitsvermittelnde Reste, wie verzweigte Polyalkylen-, verzweigte und unverzweigte Polyoxalkylen-Reste über eine divalente Gruppe $L_1$ mit dem Polymerkern verknüpft werden.

Beispiele für geeignete löslichkeitsvermittelnde Verbindungen sind

- Guerbetalkohole hergestellt aus Talgfettalkoholen,
- Guerbetsäuren, hergestellt mittels Oxidation aus Guerbetalkoholen,
- Einseitig blockierte Polytetrahydrofurane mit einem Molgewicht < 10000g/Mol,
- Verzweigte und/oder ungesättigte Fettsäuren, wie beispielsweise 2-Ethylhexansäure, Isostearinsäure, Ölsäure, Elaidinsäure, Linolsäure,
- Hydroxyl- oder Amino-terminierte Polyisobutene mit einem Molgewicht < 1000 g/Mol.

**Dispergierend wirkende Reste**

Weiterhin kann gemäß Formel (I) der hyperverzweigte Polymerkern mit dispergierend wirkenden Resten verknüpft werden. Solche dispergierend wirkenden Seitenketten M2, die über die divalente Gruppen L2 an den hyperverzweigten Kern gebunden sind, können die Agglomeration des erfindungsgemäßen Nukleierungsmittel und der sich daraus bildenden sehr kleinen Kristallite verhindern und dadurch ein Absetzen der sich bildenden sehr kleinen Kristallite verhindern.

Das prinzipielle Vorgehen bei der Herstellung solcher modifizierten Nukleierungsmittel läßt sich an einem Beispiel erläutern: Hydroxyl-terminierte hyperverzweigte Polymere werden in einer ersten Stufe durch Veresterung mit gesättigten, unverzweigten Fettsäuren zu Nukleierungsmitteln umgesetzt. Dabei wird die Stöchiometrie so eingestellt, daß noch freie Hydroxylgruppen vorhanden sind. Anschließend wird dieses Produkt mit einem Säureanhydrid verestert. Die dabei entstehende freie Carboxylfunktion wird anschließend durch stöchiometrische Zugabe einer Amin-Verbindung in ein Salz überführt.

Beispiele für Säureanhydride, die für diese Umsetzung bevorzugt eingesetzt werden, sind Maleinsäureanhydrid, Phthalsäureanhydrid und Bernsteinsäureanhydrid.

Bevorzugte Amine sind sekundäre und tertäre Fettamine, aber auch cyclische Verbindungen wie beispielsweise Morpholin.

**Kombination mit bekannten Fließverbesserern und Paraffmdispergatoren**

Die erfindungsgemäßen Nukleierungsmittel können alleine oder in Kombination mit bekannten Stockpunktserniedrigern angewendet werden.

Geeignete Stockpunktserniedriger sind Co- oder Terpolymere oder Kammpolymere auf der Basis von Ethylen und Vinylestern, Polyacrylate oder Polymethacrylate, Beispiele für solche Produkte sind:

- Ethylen-Vinylacetat-Hexen-Terpolymere gemäß DE-A-34 43 475
- Ethylen-Vinylacetat-Diisobutylen-Terpolymere gemäß EP-A-0 203 554
- Mischpolymerisate des Ethylens mit Alkylcarbonsäurevinylesters gemäß EP-A-0 491 225
- Fumarat-Vinylacetat-Kammpolymere gemäß EP-A-0 153 176
- Kammpolymere aus einem C6-C24-$\alpha$-Olefin und einem N-C6- bis C22-Alkylmaleinsäureimid gemäß EP-A-0 320 766

Weiterhin können die erfindungsgemäßen Nukleierungsmittel in Kombination mit polaren stickstoffhaltigen monomeren oder polymeren Paraffindispergatoren (Antiabsetzmittel) angewendert werden. Beispiele für solche stickstoffhaltige Paraffindispergatoren sind:

- Umsetzungsprodukte von Alkenylspirobislactonen mit Aminen gemäß EP-A-0 413 279,

- Öllösliche Umsetzungsprodukte von Phthalsäureanhydrid mit Aminen gemäß EP-A-0 061 894,

- Umsetzungsprodukte von Aminoalkylencarbonsäuren mit Aminen gemäß EP-A-0 597 278,

- Umsetzungsprodukte von alternierenden Copolymeren auf der Basis von α,β-ungesättigten Verbindungen und Maleinsäureanhydrid mit primären Aminen und aliphatischen Alkoholen gemäß EP-A-0 154 177,

- Copolymere auf der Basis von aliphatischen Olefinen und Maleinsäureanhydrid, wobei das Copolymere Ester- als auch Amidgruppen aufweist gemäß EP-A-0 283 293,

- Umsetzungsprodukte von Copolymeren auf der Basis von Maleinsäureanhydrid und α, β-ungesättigten Verbindungen wie Styrol mit Dialkylaminen gemäß EP-A-0 436 151,

- Copolymere auf der Basis von α,β-ungesättigten Olefinen mit mindestens 3 C-Atomen und α, β-ungesättigten Dicarbonsäureanhydriden, wobei die Dicarbonsäureanhydrideinheiten durch polymeranaloge Umsetzung mit Polyetheraminen oder Alkanolaminen in Imid-, Amid- und Ammonium-Einheiten überführt wurden EP-A-0 688 796.

**Kombination mit weiteren Additiven**

Die erfindungsgemäßen Nukleierungsmittel können allein oder in Kombination mit weiteren Additiven wie beispielsweise Antioxidantien, Korrosionsschutzmittel, Anti-wear- oder Lubricity-Additiven, Farbstoffen oder Markierungsmitteln, Antistatika, Cetanzahl-Verbesserer, Demulgatoren, Anti-Schaum-Mitteln oder Metall-Deaktivatoren eingesetzt werden.

**Anwendung der erfindungsgemäßen Verbindungen**

Die erfindungsgemäßen Nukleierungsmittel finden Verwendung als Zusatz in paraffinhaltigen Rohölen, Kraftstoffen, Brennstoffen, Ölen oder Schmierstoffen und in fettstämmigen Kraftstoffen, Brennstoffen oder Ölen.

Beispiele für Mitteldestillate sind Raffinerieprodukte mit einem Siedebereich von ca. 150 - 500°C, die als Heizöle, Dieselkraftstoff, Kerosin, Jetfuel erhältlich sind.

Weiterhin sind die erfindungsgemäßen Nukleierungsmittel besonders für Kohlenwasserstoffe-Gemische aus technischen oder halbtechnischen Fischer-Tropsch-Prozessen geeignet. Solche Kraftstoffe sind u. a. unter der Bezeichnung "Synfuel" oder "Sunfuel" bekannt geworden. Weiterhin können die erfindungsgemäßen Nukleierungsmittel bei paraffinhaltige Kraft- und Brennstoffen auf Basis von Pyrolyseölen angewendet werden. Die Gewinnung solcher Pyrolyseöle ist beispielsweise in H. Kopetz, T. Weber, W. Palz, P. Chartier, G. L. Ferrero (Hrsg.), Biomass for Energy and Industry, Proceedings ofthe International Conference Würzburg, Germany 8-11 June 1998 beschrieben.

Beispiele für fettstämmige Kraft- und Brennstoffe sind Fettsäuremethylester, hergestellt aus Rapsöl, Sojaöl, Palmöl, Rindertalg, Sonnenblumenöl, Altspeisefett aus Gastronomiebetrieben und Mischungen daraus. Ebenso sind die erfindungsgemäßen Nukleierungsmittel gut wirksam in Gemischen bestehend aus Mitteldestillat-Produkten mit fettstämmigen Kraftstoffen, insbesondere in Gemischen aus Fettsäuremethylestern mit Dieselkraftstoff in Mischungsverhältnissen von 1:99 bis zu 99:1.

Die vorteilhafte Wirkung der erfindungsgemäßen Nukleierungsmittel beruht darauf, dass bei den vorgenannten Produkten bereits bei einer sehr geringen Übersättigung der ausfallenden Paraffinbestandteile oder der entsprechenden Fettsäureester ein gleichzeitiges und die ganze Produktmatrix erfassendes Kristallwachstum einsetzt. Die Fließfähigkeit der Produkte bleibt beim Abkühlen über einen großen Temperaturbereich erhalten.

Weiterhin können die erfindungsgemäßen Nukleierungsmittel als Zusätze (Seed-Kristalle) bei der Gewinnung von Paraffinwachsen aus Petroleumprodukten, zur Entparaffinierung von Schmierölen oder zur Einstellung der Fließeigenschaften von Schmierfetten eingesetzt werden.

Detaillierte Angaben zur Gewinnung von Paraffinwachsen und zur Entparaffinierung findet man in M. Freund, Paraffin Products, Elsevier Scientific Publishing Company (1982)

Die erfindungsgemäßen Nukleierungsmittel werden paraffinhaltigen Kraftstoffen, Brennstoffe, Ölen oder Schmierstoffen und fettstämmigen Kraft- und Brennstoffen in einem Konzentrationsbereich zwischen 0,005 - 5 Gewichtsprozent, bevorzugt 0,01 - 2 Gewichtsprozent, besonders bevorzugt 0,05 - 1 Gewichtsprozent, zugesetzt.

Zur leichteren Dosierung können flüssige oder pastöse Konzentrate mit bis zu 70 Gewichtsprozent Nukleierungsmittel hergestellt werden. Als Lösemittel für die Herstellung dieser Konzentrate wird vorteilhaft die zu additivierende Matrix herangezogen. Andere geeignete Lösemittel sind Chlorkohlenwasserstoffe, wie beispielsweise Dichlormethan oder Chloroform, flüssige Isoparaffine, Aromaten wie beispielsweise Toluol, Xylol, Methylnaphthalin-Mischungen, hochsiedende Aromatengemische wie Solvent Naphtha.

Die Temperatur bei der Einarbeitung der erfindungsgemäßen Nukleierungsmittel in eine Matrix wird so gewählt, daß eine homogene Lösung mit der Matrix gebildet wird. Die Kontrolle, ob das Nukleierungsmittel homogen gelöst ist, kann durch Untersuchungsmethoden, die in der Kolloidchemie gebräuchlich sind, wie beispielsweise Mikroskopie, Lichtstreuung oder Ultrazentrifugation erfolgen.

Geeignete Einarbeitungstemperaturen sind 20 bis 120°C, bevorzugt 30 bis 100°C, besonders bevorzugt 40 bis 80°C.

**Testmethoden für Prüfung der Wirksamkeit**

Für die Beurteilung der Wirksamkeit der erfindungsgemäßen Nukleierungsmittel wurden folgende Testverfahren angewendet:

Test A: Bestimmung der Filtrierbarkeit: CFPP-Wert (Cold Filter Plugging Point) bestimmt nach DIN EN 116

Test B: Die additivierten Produkte wurden in 1000 ml Messzylindern für 20 Stunden in einem Kälteschrank bei -13°C gelagert. Anschließend wurden visuell das Volumen und Aussehen der Paraffinphase als auch der Flüssigkeitsphase bestimmt.

**Beispiele:**

Die folgenden Beispiele 1 bis 8 sind in den anliegenden Zeichnungsfiguren 4 bis 11 jeweils graphisch dargestellt.

<u>Beispiel 1 (Additiv A)</u>

Apparatur: 250 mL-Dreihalskolben ausgestattet mit Innenthermometer, Rückflusskühler mit Dean-Stark-Wasserabscheider, mechanischem Rührer, Argon-Einleitung zur Inertisierung und Heizbad.
In die Apparatur werden als Reaktionskomponenten eingewogen:

22,0 g Boltom H40, Hydroxyl-terminiertes hyperverzweigtes Polymer
21,3 g Stearinsäure
19,2 g Palmitinsäure
50 ml Xylol
0,2 g p-Toluolsulfonsäure

Das Reaktionsgemisch wurde unter Rühren zum Sieden erhitzt. Dabei wurde ein schwacher Argon-Strom durch die Reaktionslösung geleitet und das gebildete Reaktionswasser aufgefangen. Es wurde solange erhitzt, bis eine Probe eine Säurezahl <5 mg KOH/g zeigte.
Anschließend wurde das Lösemittel abdestilliert (Innentemperatur 155°C) und die zurückbleibende Schmelze für 30 min bei 130°C im Wasserstrahlvakuum vom Restlösemittel und flüchtigen Komponenten befreit.
Anschließend wurde die Schmelze auf ein kaltes Blech getropft und dadurch pastilliert. Das farblose wachsartige Produkt ist bei Raumtemperatur in Dieselkraftstoff und Biodiesel gut löslich.

<u>Beispiel 2 (Additiv B)</u>

Der Versuch aus Beispiel 1 wurde mit folgenden Einwaagen wiederholt:

22,0 g Boltorn H40
42,6 g Stearinsäure
5,6 Ölsäure
0,2 ml Methansulfonsäure als Veresterungskatalysator
50 ml Xylol

Das farblose wachsartige Produkt ist bei Raumtemperatur in Dieselkraftstoff und Biodiesel gut löslich.

<u>Beispiel 3 (Additiv C)</u>

In einer Apparatur, wie in Beispiel 1 beschrieben wurden 22,0 g Boltom H40, 42,6 g Stearinsäure und 0,2 ml Methansulfonsäure in 70 ml Toluol unter Rühren und Rückflußsieden für 4 h erhitzt und das Reaktionswasser entfernt. Anschließend wurde eine Mischung aus 3,6 g Acrylsäure und 0,1 g Methylhydrochinon zugegeben und die Reaktionslösung unter Rühren für weitere 4 h erhitzt. Im nächsten Schritt wurde das Lösemittel und die nicht umgesetzte Acrylsäure im Wasserstrahlvakuum abdestilliert. Dabei soll die Innentemperatur 120°C nicht überschreiten. Zu der Schmelze wurden 5,2 g Distearylamin gegeben und für 2 h bei 120°C gerührt. Anschließend wurde die Schmelze auf ein kaltes Blech gegossen und die erstarrte Masse granuliert.

Beispiel 4 (Additiv D)

In einer Apparatur, wie in Beispiel 1 beschrieben, wurden 22,0 g Boltorn H40, 38,4 g Palmitinsäure und 0,1 g p-Toluolsulfonsäure in 50 ml Xylol unter Rühren und Rückflußsieden solange erhitzt, bis eine Probe ein Säurezahl <5 mg KOH/g zeigte. Anschließend wurde das Lösemittel und flüchtige Nebenprodukte im Wasserstrahlvakuum bei 120°C abdestilliert. Zu dieser Schmelze wurde eine Mischung aus 50 ml Dieselkraftsstoff, 3 g Stearylisocyanat und 0,1 g Diazabicyclononan gegeben und für 3 h gerührt. Das erhaltene Produktgemisch wurde mit 1 L Dieselkraftstoff verdünnt und stellte eine gebrauchsfertige Additiv-Lösung dar.

Beispiel 5 (Additiv E)

In einer Apparatur, wie in Beispiel 1 beschrieben, wurden 18,0 g Boltorn H40, 3 g Boltorn H30, 44,0 g Stearinsäure und 0,1 g p-Toluolsulfonsäure in 50 ml Xylol unter Rühren und Rückflußsieden solange erhitzt, bis eine Probe eine Säurezahl <5 mg KOH/g zeigte. Anschließend wurde das Lösemittel und flüchtige Nebenprodukte im Wasserstrahlvakuum bei 130°C abdestilliert. Zu dieser Schmelze wurde eine Mischung aus 50 ml Altfettmethylester und 1,5 g Phthalsäureanhydrid gegeben und bei 120°C für 2 h gerührt. Zu dieser Reaktionslösung wurde anschließend eine Mischung aus 3,3 g N, N-Dimethyl-Stearylamin und 11 Dieselkraftstoff gegeben und 10 Minuten gerührt. Das erhaltende Produktgemisch stellte eine gebrauchsfertige Additiv-Lösung dar.

Beispiel 6 (Additiv F)

In einer Apparatur, wie im Beispiel 1 beschrieben, wurden 22,0 g Boltom H40, 42,6 g Stearinsäure, 0,2 ml Methansulfonsäure als Veresterungskatalysator und 60 ml Xylol unter Rühren und Rückflußsieden solange erhitzt, bis eine Probe eine Säurezahl >5mg KOH/g zeigte. Anschließend wurde das Lösemittel und flüchtige Nebenprodukte im Wasserstrahlvakuum bei 130°C abdestilliert. Zu dieser Schmelze wurde 5,0 g Polyisobutenylbemsteinsäureanhydrid (PIBSA, $M_n$ 1000), gelöst in 11 Biodiesel gegeben und 10 Minuten gerührt. Das erhaltene Produktgemisch stellte eine gebrauchsfertige Additiv-Lösung dar.

Die erfindungsgemäßen Nukleierungsmittel wurden in verschiedene Mitteldestillaten (Dieselkraftstoff DKL1, Dieselkraftstoff DK2) und fettstämmigen Kraftstoffen (Fettsäuremethylester FAME1, hergestellt aus Rapsöl, Fettsäuremethylester FAME2, hergestellt aus Altspeisefett) geprüft, die folgende Eigenschaften zeigten:

| | Methode | Einheit | DK1 | DK2 |
|---|---|---|---|---|
| CFPP | DIN EN 116 | °C | -3 | -4 |
| Dichte bei 20°C | EN ISO 12185 | g/ml | 0,822 | 0,824 |
| Siedeanfang | pR EN ISO 3405 | °C | 164 | 160 |
| 20% Siedepunkt | pR EN ISO 3405 | °C | 210 | 205 |
| 90% Siedepunkt | pR EN ISO 3405 | °C | 340 | 336 |
| Siedeende | pR EN ISO 3405 | °C | 365 | 361 |
| CFPP | DIN EN 116 | °C | -12 | -8 |
| Dichte bei 20°C | EN ISO 12185 | g/ml | 0,884 | 0,883 |

Diese Kraftstoffe wurden mit den hergestellten Produkten A - F aus den Beispielen 1 - 6 geprüft und zeigten gemäß Test A und Test B folgende Ergebnisse:

| | Produkt | Wirkstoffkonzentration* | CFPP | Paraffin-Phase Vol.-%/ Aussehen | Flüssigphase Vol.-%/ Aussehen |
|---|---|---|---|---|---|
| DK1 | A | 500 ppm | -5 | 90%, dispergiert | 10%, klar |
| DK2 | D | 500 ppm | -8 | 95%, dispergiert | 5%, klar |

* Wirkstoffkonzentration bezogen auf Festkörpergehalt der Beispielsprodukte

(fortgesetzt)

| | Produkt | Wirkstoffkonzentration* | CFPP | Paraffin-Phase Vol.-%/ Aussehen | Flüssigphase Vol.-%/ Aussehen |
|---|---|---|---|---|---|
| FAME1 | C | 800 ppm | -15 | 90%, dispergiert | 10%, klar |
| FAME2 | B | 800 ppm | -12 | 90%, dispergiert | 10%, klar |
| DK1 | E | 600 ppm | -5 | 100%, dispergiert | 0%, - |
| FAME1 | F | 600 ppm | -14 | 95%, dispergiert | 5%, klar |

* Wirkstoffkonzentration bezogen auf Festkörpergehalt der Beispielsprodukte

Aus den Beispielen geht hervor, daß die hergestellten Nukleierungsmittel in sehr geringer Konzentration den CFPP-Wert absenken und zu einer gut dispergierten, sehr feinen Kristallmasse führen.

**Patentansprüche**

1. Nukleierungsmittel auf der Basis von hyperverzweigten Polymeren, **gekennzeichnet durch** die Formel I.

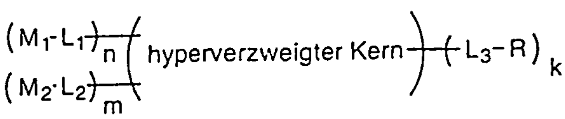

(I)

wobei
n oder m unabhängig voneinander 0 oder 1 ist oder n+m<k,
k etwa 10 bis 500 beträgt,
R gleiche oder verschiedene unverzweigte gesättigte Alkylreste mit 8 bis 40 C-Atomen bedeutet,
M1 einen jeweils gleichen oder verschiedenen organischen löslichkeitsvermittelnden Rest mit 10 bis 1000 C-Atomen bedeutet,
M2 einen jeweils gleichen oder verschiedenen organischen dispergierend wirkenden Rest mit 10 bis 100 C-Atomen bedeutet, der wenigstens ein N-Atom enthält und der ungeladen oder zwitterionisch sein kann,
L1, L2 und L3 jeweils eine gleiche oder verschiedene divalente Ester-, Carbonat-, Ether-, Tioether-, Amid-, Urethan-, Harnstoff oder eine $-C(O)-CH_2-CH_2-NR'$-Gruppe, in welch letzterer R' ein unverzweigter gesättigter Alkylrest mit 8 bis 40 C-Atomen ist, bedeutet.

2. Nukleierungsmittel nach Anspruch 1, wobei k den Wert 20 bis 300 hat.

3. Nukleierungsmittel nach Anspruch 2, wobei k den Wert 30 bis 200 hat.

4. Nukleierungsmittel nach einem der Ansprüche 1 bis 3, wobei R ein Alkylrest mit 10 bis 36 C-Atomen ist.

5. Nukleierungsmittel nach Anspruch 4, wobei R ein Alkylrest mit 12 bis 32 C-Atomen ist.

6. Nukleierungsmittel nach einem der Ansprüche 1 bis 5, wobei L1, L2 und L3 jeweils eine Ester- oder eine Amidgruppe ist.

7. Nukleierungsmittel nach einem der Ansprüche 1 bis 5, wobei R' ein Alkylrest mit 10 bis 36 C-Atomen ist.

8. Nukleierungsmittel nach Anspruch 7, wobei R' ein Alkylrest mit 12 bis 32 C-Atomen ist.

9. Verwendung eines Nukleierungsmittels nach einem der Ansprüche 1 bis 8 zur Verbesserung des Kältefließverhaltens in paraffinhaltigen Rohölen, Kraftstoffen, Brennstoffen, Ölen, Schmierstoffen oder in fettstämmigen Kraftstoffen in einem Konzentrationsbereich von 0,005 bis 5 Gewichtsprozent.

**10.** Verwendung nach Anspruch 9 in einem Konzentrationsbereich von 0,01 bis 2 Gewichtsprozent.

**11.** Verwendung nach Anspruch 10 in einem Konzentrationsbereich von 0,05 bis 1 Gewichtsprozent.

**12.** Verwendung nach einem der Ansprüche 9 bis 12 in Kombination mit einem Stockpunktsverbesserer und/oder einem Antiabsetzmittel.

**13.** Verfahren zur Herstellung eines Nukleierungsmittels nach einem der Ansprüche 1 bis 8 unter Verwendung von hyperverzweigten Polymeren mit 10 bis 500 gleichen oder verschiedenen endständigen Hydroxyl-, Caboxyl- oder Amino-Gruppen durch Verknüpfung mit langkettigen, endständig funktionalisierten unverzweigten Alkylverbindungen.

**14.** Verfahren nach Anspruch 13, wobei als hyperverzweigte Polymere hyperverzweigte Polyglyzerine mit endständigen OH-Gruppen oder hyperverzweigte Polyetylenimine mit endständigen Aminogruppen oder hyperverzweigte Polyester mit endständigen OH-Gruppen eingesetzt werden.

**15.** Verfahren nach Anspruch 1 oder 2, wobei hyperverzweigte Polymere mit 20 bis 300 endständigen Gruppen eingesetzt werden.

**16.** Verfahren nach Anspruch 15, wobei hyperverzweigte Polymere mit 30 bis 200 endständigen Gruppen eingesetzt werden.

**17.** Verfahren nach einem der Ansprüche 13 bis 16, wobei als langkettige Verbindungen unverzweigte gesättigte Fettsäuren, Fettalkohole oder Fettisocyanate oder daraus abgeleitete aktivierte Fettsäure- oder aktivierte Fettalkohol-Dirivate mit jeweils 10 bis 40 C-Atomen sind.

**18.** Verfahren nach Anspruch 17, wobei die langkettigen Verbindungen jeweils 14 bis 24 C-Atome haben.

**19.** Verfahren nach einem der Ansprüche 13 bis 16, wobei die langkettigen Verbindungen unverzweigte gesättigte primare oder sekundäre Fettamine der Struktur HNRR' sind, wobei R und R' gleich oder verschieden jeweils Wasserstoff oder gesättigte unverzweigte aliphatische Reste mit 10 bis 30 C-Atomen sind.

**20.** Verfahren nach Anspruch 19, wobei die aliphatischen Reste jeweils 14 bis 24 C-Atome haben.

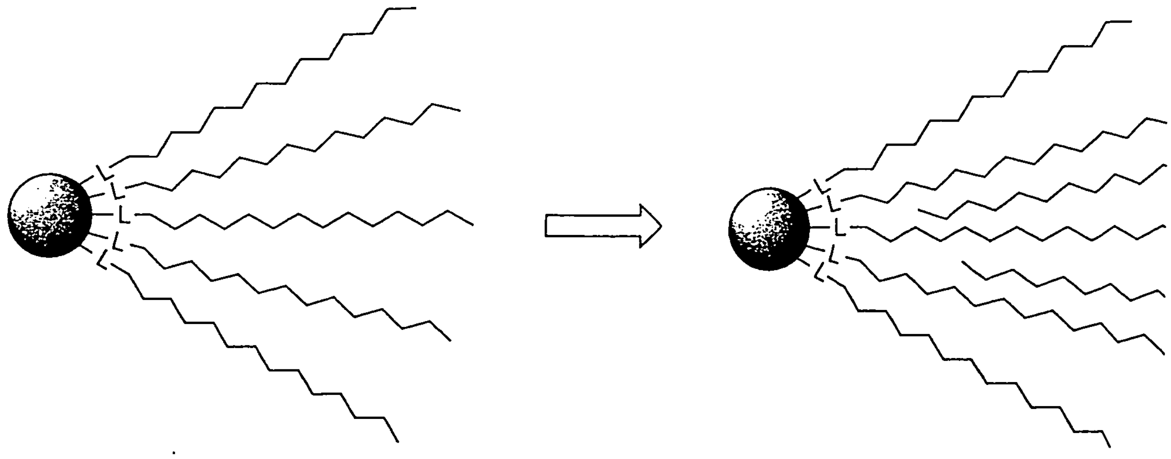

Fig. 1

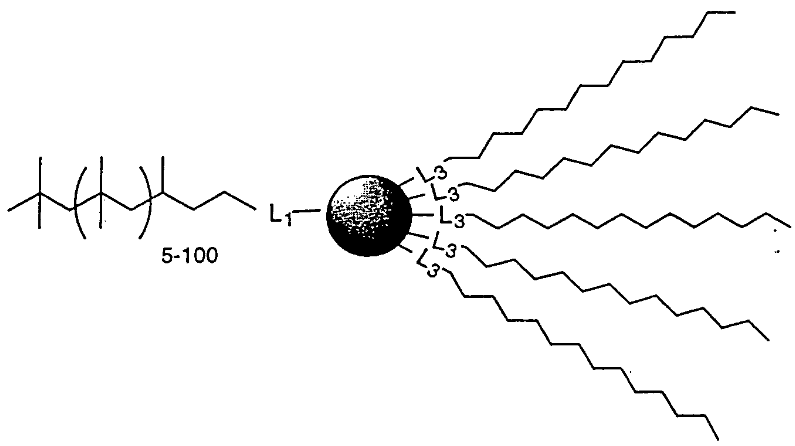

Fig. 2

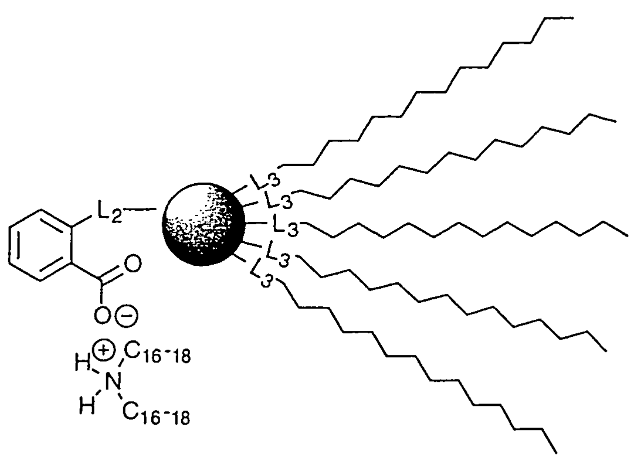

Fig. 3

Fig. 4

Beispiel 1

Boltorn H40

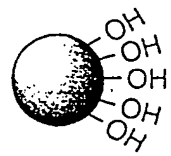

+

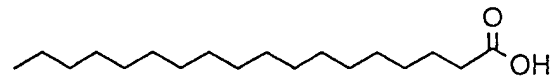

C18:0

$C_{18}H_{36}O_2$
Mol. Wt.: 284,48

Verhältnis COOH/OH-Gruppen:
50/64 = 0,78

Fig. 5

Beispiel 2

Boltorn H40

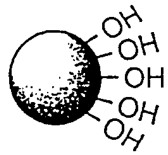

+

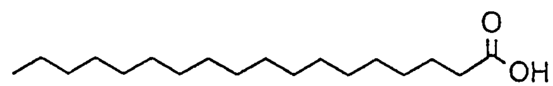

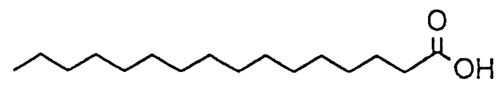

$C_{16}H_{32}O_2$
Mol. Wt.: 256,42

Verhältnis COOH/OH-Gruppen:
50/64 = 0,78

Fig. 6

Beispiel 3

Boltorn H40

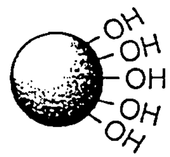

+

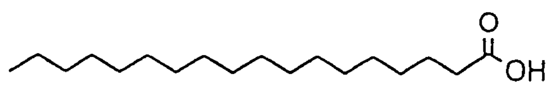

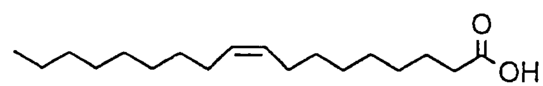

$C_{18}H_{32}O_2$
Mol. Wt.: 280,45

VerhältnisStearinsäure/Ölsäure:
10:1

Ölsäure -> Erhöhung der Löslichkeit

Fig. 7

Beispiel 4

Boltorn H40

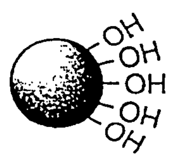

1. 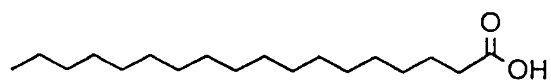
2.
3. 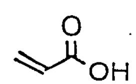 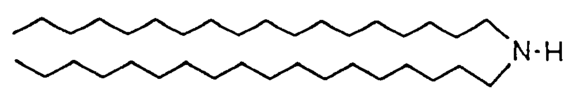

Dispergator-Wirkung

Fig. 8

Beispiel 5

Boltorn H40

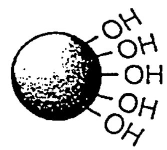

+

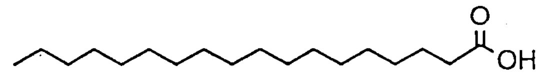

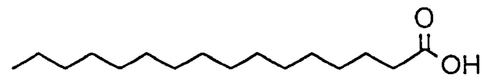

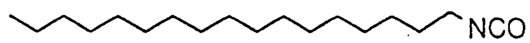

Verhältnis COOH/OH-Gruppen:
30/64 = 0,47

Fig. 9

Beispiel 6

PG-8

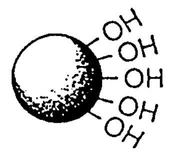

+

1.
2.
3.

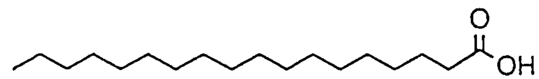

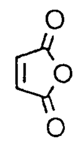

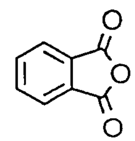

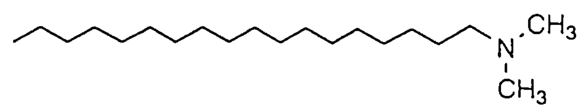

Verhältnis COOH/OH-Gruppen:
50/64 = 0,78

Fig. 10

Beispiel 7

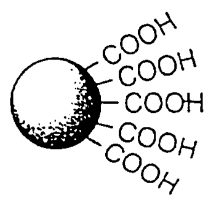

1.
2.

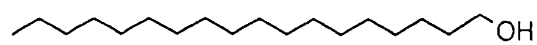

PIBSA (Löslichkeitsvermittler)

Fig. 11

Beispiel 8

PG-8